# EUROPÄISCHE PATENTANMELDUNG

(11) **EP 1 479 541 A1**
(43) Veröffentlichungstag der Anmeldung: **24.11.2004**
(21) Anmeldenummer: 04008306.5
(22) Anmeldetag: 06.04.2004
(51) Int. Cl.: B60G 3/26

(54) **Radführungsvorrichtung eines gelenkten Kraftfahrzeugrades**

(30) Priorität: 23.05.2003 DE 10323262
(71) Anmelder: DaimlerChrysler AG, 70567 Stuttgart (DE)
(72) Erfinder: Bortz, Joachim, 70565 Stuttgart (DE); Gaupp, Andreas, 71111 Waldenbuch (DE); Mödinger, Wolfgang, 71384 Weinstadt (DE)

(57) **Zusammenfassung**

Die Erfindung betrifft eine Radführungsvorrichtung (10) eines gelenkten Kraftfahrzeugrades (9), welches Radführungslenker (11,12) und einen Achsschenkel (20) aufweist. Der Achsschenkel (20) weist eine Aufnahmevorrichtung (8) für eine Radlagerung sowie Anbindungsstellen (35,36) zur Lagerung von Lagerzapfen (41,43) von mit den Radführungslenkern (11,12) verbundenen Kugelgelenken (40,42) auf. Erfindungsgemäß sind die Anbindungsstellen (35,36) unterschiedlich weit von der Raddrehachse (4) beabstandet und die Kugelgelenke (40,42) jeweils zwischen Anbindungsstelle (35,36) und Raddrehachse (4) oder die Anbindungsstellen (35,36) jeweils zwischen Raddrehachse (4) und Kugelgelenken (40,42) angeordnet.

## Beschreibung

Die Erfindung betrifft eine Radführungsvorrichtung eines gelenkten Kraftfahrzeugrades mit den Merkmalen des Oberbegriffs des Anspruchs 1.

Eine derartige Radführungsvorrichtung ist aus der DE 42 07 856 A1 bekannt. Dort wird eine Radaufhängung für lenkbare Kraftfahrzeugräder offenbart, wobei untere Querlenker über auf etwa gleichem Niveau liegende Kugelgelenke mit einem Radträger verbunden sind.

Aus der DE 42 42 815 A1 ist eine Fahrzeugaufhängungsvorrichtung bekannt, bei der ein unterer Quer- und ein unterer Längslenker jeweils in einem Verbindungsabschnitt mit einem Radträger gelenkig verbunden sind. Dabei liegen diese Verbindungsabschnitte ebenfalls in der selben horizontalen Ebene.

Aufgabe der Erfindung ist es demgegenüber, eine Radführungsvorrichtung mit geringerem Lenkkräftebedarf anzugeben.

Diese Aufgabe wird durch die Merkmale des Anspruchs 1 gelöst.

Grundlegender Gedanke der Erfindung ist es, die Anbindungsstellen der Lenker, über die die Lenker mit einem Achsschenkel verbunden sind, unterschiedlich weit beabstandet von der Drehachse des Fahrzeugrades anzuordnen, wobei die Kugelgelenke jeweils zwischen Anbindungsstelle und Raddrehachse oder die Anbindungsstellen jeweils zwischen Raddrehachse und Kugelgelenken angeordnet sind.

Dadurch können die Anbindungsstellen der Lenker an den Achsschenkel - projiziert auf eine Reifenaufstandsebene-nahe beieinander liegen, so dass ein zwischen den Lagern bestehender Koppelabstand gering ist. Dies führt dazu, dass während einer Lenkbewegung lediglich relativ geringe Lenkkräfte notwendig sind.

Auch weisen die Lenker zusammen mit ihren Anbindungen an den Achsschenkel in vertikaler Richtung lediglich geringe Bauhöhen auf, so dass beispielsweise eine ausreichende Bodenfreiheit gewährleistet ist. Ebenso ist es möglich, diese Radführungsvorrichtung bei angetriebenen, gelenkten Fahrzeugrädern einzusetzen, da die Art der Lenkeranbindung ausreichend Freiraum für eine zu den Rädern führenden Seitenwelle schafft.

In Ausgestaltung der Erfindung sind die Anbindungsstellen unterschiedlich weit von einer annähernd vertikalen, in Fahrtrichtung verlaufenden Radmittenebene eines mit der Radlagerung drehbeweglich verbundenen Fahrzeugrades beabstandet. Ebenso kann die Anbindungsstelle, die den geringeren Abstand zur Raddrehachse aufweist, in Fahrrichtung vor der Raddrehachse angeordnet werden. Neben kinematischen Vorteilen beim Radeinschlag bzw. beim Ein- und Ausfedern des Fahrzeugrades bieten diese konstruktive Anordnungen den Vorteil, dass die Lagerzapfen der Kugellager beider Lenker im wesentlichen gleichgerichtet verlaufen können und dennoch ausreichend Bauraum zur Verfügung steht, um die Lagerzapfen mit den Anbindungsstellen wirkschlüssig zu verbinden. Diese Verbindungen werden zweckmäßigerweise lösbar, beispielsweise als Verschraubungen ausgeführt.

Weitere Vorteile der Erfindung ergeben sich aus den Unteransprüchen und aus den nachfolgend anhand von Zeichnungen näher beschriebenen Ausführungsformen der Erfindung.

Dabei zeigen:
- Fig. 1:: eine perspektivische Innenansicht einer Radaufhängung eines angetriebenen, lenkbaren linken Vorderrades eines Kraftfahrzeugs,
- Fig. 2:: eine perspektivische Innenansicht eines Achsschenkels,
- Fig. 3:: eine perspektivische Ansicht einer erfindungsgemäßen Radführungsvorrichtung,
- Fig. 4:: eine Ansicht in Fahrtrichtung einer Radführungsvorrichtung gem. Fig. 3,
- Fig. 5:: eine Draufsicht auf eine Radführungsvorrichtung gem. Fig. 3.

In den nachfolgenden Zeichnungen sind gleiche oder ähnliche Bauteile mit den gleichen Bezugszeichen versehen.

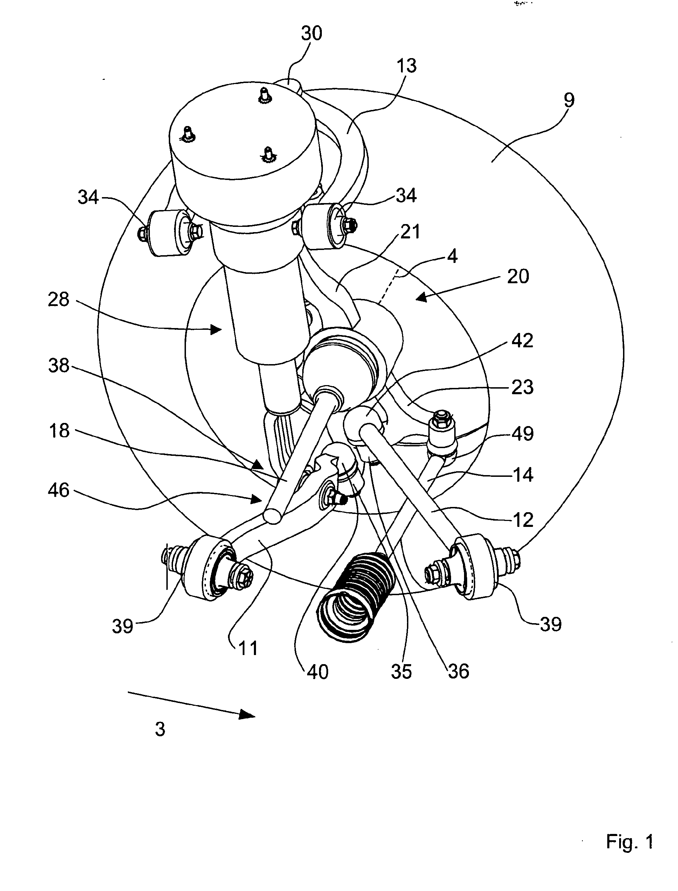

In Fig. 1 ist eine perspektivische Innenansicht einer Radaufhängung 1 eines angetriebenen, lenkbaren linken Vorderrades eines Kraftfahrzeugs dargestellt. Ein Fahrzeugrad 9 ist drehbeweglich in einer (verdeckten) Aufnahmevorrichtung 8 für eine Radlagerung eines Achsschenkels 20 gelagert.

Oberhalb der Aufnahmevorrichtung 8 ist der Achsschenkel 20 schwanenhalsförmig gebogen. Am oberen Ende des Schwanenhalses 21 ist der Achsschenkel 20 über ein oberes Lager 30 mit einem Dreieckslenker 13 gelenkig verbunden. Die beiden anderen Enden des Dreieckslenker 13 sind über Lager 34 z.B. Gummilager oder hydraulische Lager schwenkbeweglich am nicht weiter dargestellten Aufbau oder Rahmen des Kraftfahrzeugs abgestützt.

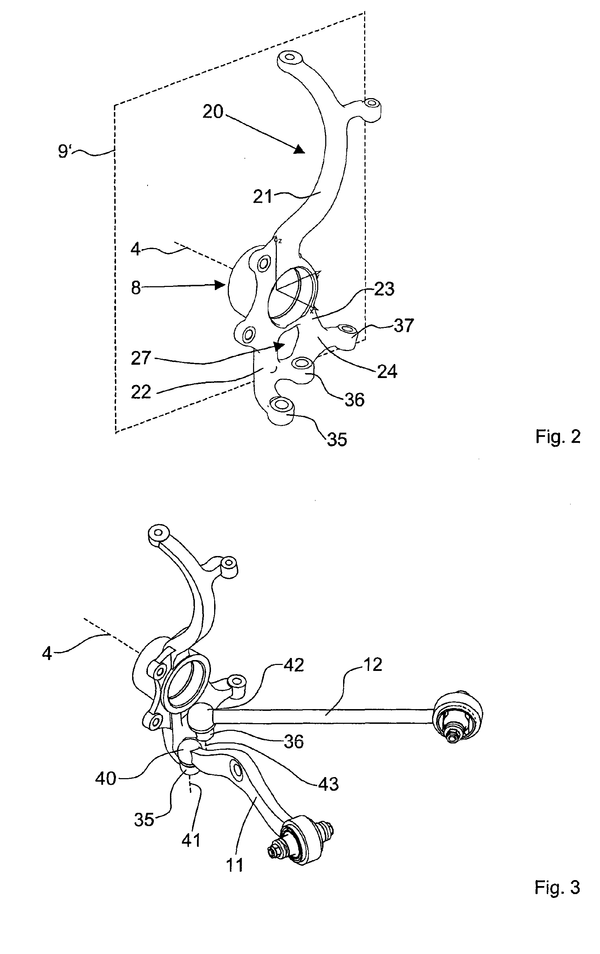

Unterhalb der Aufnahmevorrichtung 8 weist der Achsschenkel 20 zwei Anbindungsstellen 35,36 für die Anbindung von zwei über Kugelgelenke 40,42 gelagerte untere Querlenker 11,12 auf. Auf die Anbindungsstellen 35,36 wird im Zuge der Beschreibung der Fig. 2 bis Fig. 5 detaillierter eingegangen werden.

An den dem Achsschenkel 20 entgegengesetzten Enden der unteren Lenker 11,12 sind diese über Gummi- bzw. hydraulische Lager 39 am Aufbau bzw. Rahmen des nicht weiter dargestellten Fahrzeuges gelagert. Der in Fahrtrichtung 3 hintere untere Querlenker 11 ist in einer Kröpfung 46 über ein Gelenk 38 mit einem Federbein 28 verbunden, welches am oberen Ende ebenfalls am nicht dargestellten Aufbau bzw. Rahmen des Fahrzeugs kardanisch gelagert ist.

Bei der in Fig. 1 dargestellten Ausführungsform handelt es sich um die Radaufhängung eines Fahrzeugs mit angetriebenen Vorrädern 9. Daher ist eine Gelenkwelle 18 einerseits in der Aufnahmevorrichtung 8 des Achsschenkels 20 und andererseits an einem nicht dargestellten Verteilergetriebe gelagert. Die Gelenkwelle 18 verläuft dabei annähernd koaxial zur Drehachse 4 des Rades 9.

An dem Achsschenkel 20 ist ein vor der Raddrehachse 4 überwiegend in Fahrtrichtung 3 verlaufender Spurhebel 23 ausgebildet, an dem über ein weiteres Gelenk 49 eine Spurstange 14 einer nicht weiter dargestellten Lenkeinrichtung mit dem Achsschenkel 20 verbunden ist.

In Fig. 2 ist der Achsschenkel 20 ohne die angrenzenden Bauteile dargestellt. Die Aufnahmevorrichtung 8 des Achsschenkels 20 ist rohrförmig ausgebildet und koaxial zur Raddrehachse 4 ausgerichtet. Innerhalb des rohrförmigen Abschnitts ist ein Radlager mit einem Achsstummel sowie die Gelenkwelle 18 lagerbar, über die ein Antriebsmoment auf das Rad 9 übertragbar ist. Unterhalb der Aufnahmevorrichtung 8 verlaufen zwei fingerförmige Fortsätze 22,23 nahezu radial nach unten bzw. nach hinten und leicht in Richtung Fahrzeugmitte geneigt. Letzterer Fortsatz 23, der als Spurhebel ausgebildet ist, ist dabei auf halber Länge bzw. in seinem unteren Drittel in Richtung eines waagerechteren Verlaufs abgeknickt. Im Endbereich dieses Fingers 23 ist eine Anbindungsstelle 37 in Form einer Bohrung für die kugelgelenkige Anbindung 49 der Spurstange 14 angeordnet.

Zwischen den beiden Fingern 22,23 ist eine Verbindungsstrebe in Form eines Steges 24 ausgebildet. Dadurch wird die Steifigkeit der Finger 22,23 erhöht. Die Aufnahmevorrichtung 8, die beiden Fingern 22,23 und der Steg 24 begrenzen eine dreiecksförmige bzw. fensterförmige Aussparung 27.

Der erste, nahezu direkt unterhalb der Aufnahmevorrichtung verlaufende Finger 22 ist in seinem unteren Viertel in Richtung Fahrzeugmitte abgewinkelt und weist in seinem Endbereich eine Anbindungsstelle 35 in Form einer Bohrung zur gelenkigen Anbindung des hinteren unteren Lenkers 11 auf.

An dem Steg 24 zwischen den beiden Fingern 22,23 ist eine Anbindungsstelle 36 angeordnet, an der der vordere untere Lenker 12 lagerbar ist. Diese Anbindungsstelle 36 ist zu einer annähernd vertikal durch die Mitte des Fahrzeugrades 9 und parallel zur Fahrtrichtung 3 verlaufenden Radmittenebene 9' geringer beabstandet, als die Anbindungsstelle 35 des hinteren unteren Lenkers 11.

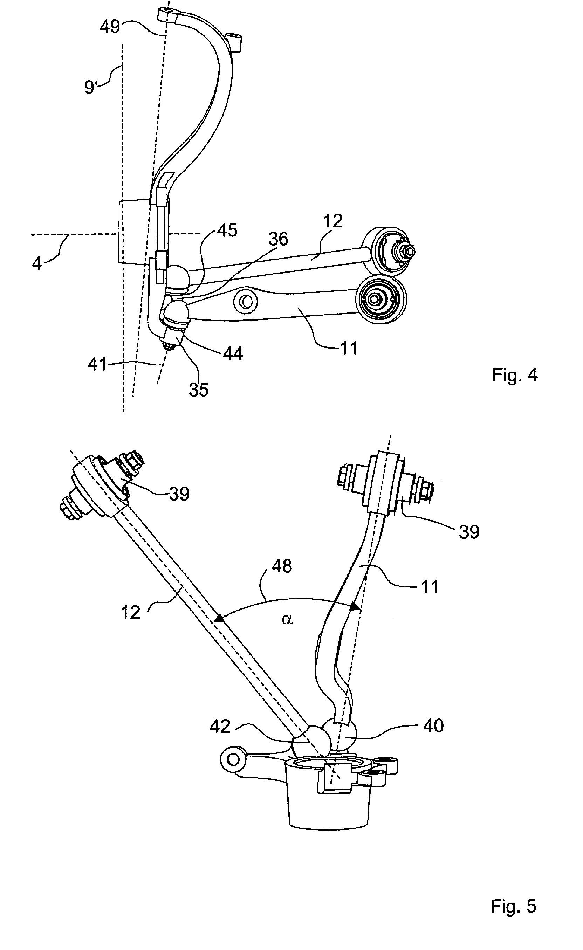

In Fig. 3 ist eine alternative Ausführungsform des erfindungsgemäßen Achsschenkels 20 dargestellt. Ebenso sind auch die mit den Anbindungsstellen 35,36 verbundenen unteren Lenker 11,12 dargestellt. Die in den dem Achsschenkel 20 zugewandten Enden der Lenker 11,12 eingelagerten Kugelgelenke 40,42 sind oberhalb der Anbindungsstellen 35,36, also zwischen der jeweiligen Anbindungsstelle 35,36 und der Raddrehachse 4 angeordnet. Die Zapfen 41,43 der Kugelgelenke 40,42, die in Fig. 3 lediglich als strichpunktierte Linien dargestellt sind, sind in den als Bohrungen ausgebildeten Anbindungsstellen 35,36 radial gelagert und beispielsweise über lediglich in den Fig. 4 und Fig. 5 dargestellte Verschraubungen unterhalb der jeweiligen Anbindungsstelle 35,36 mit dem Achsschenkel 20 kraft- und formschlüssig verbunden.

Vorteil dieser Anordnung ist, dass die Lenker 11,12 von oben an dem Achsschenkel 20 angebunden sind und somit die Lenker 11,12 einen größeren Abstand zu einer unterhalb des Achsschenkels 20 beabstandet liegenden Reifenaufstandsfläche aufweisen, als wenn die Lenker 11,12 von unten an den Anbindungsstellen 35,36 angebunden wären. Auch können somit die Lenker 11,12 mit geringeren horizontalen Kröpfungen ausgeführt werden, wodurch das Gewicht der Lenker 11,12 infolge geringerer Materialstärke gesenkt und somit die Produktionskosten verringert werden können.

Fig. 4 und Fig. 5 zeigen andere Ansichten der in Fig. 3 dargestellten Ausführungsform. So zeigt Fig. 4 eine Rückansicht des Achsschenkels 20 in Fahrtrichtung 3. Deutlich sind die gegenüber der Raddrehachse 4 geneigten Anlageflächen 44,45 der Anbindungsstellen 35,36 der unteren Lenker 11,12 zu erkennen. Ebenso sind Fig. 4 die unterschiedlichen Abstände der Anbindungsstellen 35,36 zu der Radmittenebene 9' zu entnehmen. Dadurch können die Anlageflächen 44,45 sowie die Bohrungen in den Anbindungsstellen 35,36 einfach gefertigt werden, da sie für Bearbeitungsmaschinen leicht zugänglich sind.

In der Draufsicht gem. Fig. 5 ist zu erkennen, dass sich die Silhouetten der beiden in unterschiedlichen Ebenen liegenden Kugelgelenke 40,42 überlappen. Über den Winkel α 48, unter dem die beiden unteren Lenker 11,12 in einer Projektionsebene zueinander stehen, ist die Lage des Schnittpunkts der die beiden Lager (39,40,42) eines jeden Lenkers 11,12 verbindenden Längsachsen beeinflussbar. Dieser Schnittpunkt bildet einen unteren Drehpunkt. Eine Verbindungslinie zwischen diesem unteren Drehpunkt und der Gelenkmitte des oberen Lagers 30 am oberen Ende des Achsschenkels 20 bildet eine Schwenkachse 49, um die das Rad 9 bei Verschiebung der Spurstange 14 verschwenkt wird. Verläuft der Schwenkachse 49 nahe der Radmittenebene 9', so sind der sogenannte Störkrafthebelarm und der sogenannte Lenkrollradius gering ,d.h. am Rad angreifende Antriebs- oder Bremskräfte bewirken nur ein geringes Moment um die Schwenkachse.

Da die Anbindungsstellen 35,36 der beiden unteren Lenker 11,12 in Fahrtrichtung 3 lediglich gering von einander beabstandet sind, werden die beiden Lenker 11,12 während eines Lenkvorgangs lediglich geringfügig aus ihrer Normallage verschwenkt. Dadurch ergeben sich geringere Differenzen der Nachlaufstrecken zwischen dem kurveninneren und dem kurvenäußeren Rad. Auch ist beim Lenken die Verschiebung des Radaufstandpunktes in Fahrzeugquerrichtung gering, wodurch lediglich eine relativ geringe Lenkkraft benötigt wird.

## Patentansprüche

1. Radführungsvorrichtung eines gelenkten Kraftfahrzeugrades mit Radführungslenkern und einem Achsschenkel, wobei der Achsschenkel
- eine Aufnahmevorrichtung für eine Lagerung des um eine Raddrehachse drehbeweglichen Kraftfahrzeugrades sowie
- Anbindungsstellen zur Lagerung von Lagerzapfen von mit den Radführungslenkern verbundenen Kugelgelenken aufweist,
**dadurch gekennzeichnet,**
**dass**
- die Anbindungsstellen (35,36) in unterschiedlichen horizontalen Ebenen liegen und unterschiedlich weit von der Raddrehachse (4) beabstandet sind und
- die Kugelgelenke (40,42) jeweils zwischen Raddrehachse (4) und Anbindungsstelle (35,36) angeordnet sind oder
- die Anbindungsstelle (35,36) jeweils zwischen Raddrehachse (4) und Kugelgelenk (40,42) angeordnet sind.

2. Radführungsvorrichtung nach Anspruch 1,
**dadurch gekennzeichnet,**
**dass** die Anbindungsstellen (35,36) unterschiedlich weit von einer annähernd vertikalen Radmittenebene (9') des mit der Radlagerung drehbeweglich verbundenen Fahrzeugrades (9) beabstandet sind.

3. Radführungsvorrichtung nach Anspruch 2,
**dadurch gekennzeichnet,**
**dass** die Anbindungsstelle (36), die den geringeren Abstand zur Raddrehachse (4) aufweist, in Fahrtrichtung (3) vor der Raddrehachse (4) angeordnet ist.

4. Radführungsvorrichtung nach Anspruch 2 oder 3,
**dadurch gekennzeichnet,**
**dass** die Anbindungsstelle (35), die den größeren Abstand zur Raddrehachse (4) aufweist, in Fahrtrichtung (3) hinter der Raddrehachse (4) oder in einer vertikal durch die Raddrehachse (4) verlaufende Ebene angeordnet ist.

5. Radführungsvorrichtung nach einem der vorhergehenden Ansprüche,
**dadurch gekennzeichnet,**
**dass** die Lagerzapfen (41,43) der Kugelgelenke (40,42) jeweils auf der der Raddrehachse (4) abgewandten Seite der Anbindungsstelle (35,36) mit der Radführungsvorrichtung (8) wirkschlüssig verbunden sind.

6. Radführungsvorrichtung nach einem der vorhergehenden Ansprüche,
**dadurch gekennzeichnet,**
**dass** der Achsschenkel (20) unterhalb der Aufnahmevorrichtung (8) der Radlagerung fingerförmig und annähernd radial zur Raddrehachse (4) verläuft und die Anbindungsstellen (35,36) in winklig abragenden Fortsätzen angeordnet sind.

7. Radführungsvorrichtung nach einem der vorhergehenden Ansprüche,
**dadurch gekennzeichnet,**
**dass** die Anbindungsstellen (35,36) gegenüber der Raddrehachse (4) geneigt sind.

8. Radführungsvorrichtung nach einem der vorhergehenden Ansprüche,
**dadurch gekennzeichnet,**
**dass** die Längsachsen der Lagerzapfen (41,43) windschief zueinander verlaufen.

9. Radführungsvorrichtung nach einem der vorhergehenden Ansprüche,
**dadurch gekennzeichnet,**
**dass** am Achsschenkel (20) ein Spurhebel (23) ausgebildet ist, an dem eine Spurstange (14) lagerbar ist, wobei der Spurhebel (23) in Fahrtrichtung (3) vor oder hinter der Raddrehachse (4) angeordnet ist.

10. Radführungsvorrichtung nach einem der Ansprüche 3 bis 9,
**dadurch gekennzeichnet,**
**dass** zwischen der Spurstange (14) und der der Spurstange (14) nächstliegenden Anbindungsstelle (35,36) eine Verbindungsstrebe (24) vorgesehen ist.
